# FASCICULE DE BREVET EUROPEEN

(11) **EP 3 762 955 B1**
(45) Date de publication et mention de la délivrance du brevet: **30.03.2022**
(21) Numéro de dépôt: 19705212.9
(22) Date de dépôt: 18.01.2019
(51) Int. Cl.: H01H 13/60, H01H 3/42

(54) **MANOEUVRE SYNCHRONISE D'UN DISPOSITIF BISTABLE DEPUIS UNE MULTITUDE DE MANETTES MONOSTABLES**
SYNCHRONISIERTE BEWEGUNG EINER BISTABILEN VORRICHTUNG AUS EINER VIELZAHL MONOSTABILER HEBEL
SYNCHRONISED MOVEMENT OF A BISTABLE DEVICE, FROM A MULTITUDE OF MONOSTABLE LEVERS

(30) Priorité: 08.03.2018 FR 1852015
(43) Date de publication de la demande: 13.01.2021
(73) Titulaire: Legrand France, 87000 Limoges (FR); Legrand SNC, 87000 Limoges (FR)
(72) Inventeur: CESSOT, Stéphane, 69800 Saint Priest (FR); DACCORD, Marcel, 87920 Condat Sur Vienne (FR)
(74) Mandataire: Novagraaf Technologies
(86) Numéro de dépôt international: PCT/FR2019/050101
(87) Numéro de publication internationale: WO 2019/170968

(56) Documents cités:
- DE-A1- 19 713 978
- US-A- 3 491 218

## Description

### DOMAINE TECHNIQUE DE L'INVENTION

La présente invention concerne un dispositif bistable. Un tel dispositif peut occuper deux positions distinctes et avantageusement maintenues. Au moins une manette, avantageusement monostable, permet, avantageusement au moyen d'une même manœuvre, de modifier la position du dispositif afin de passer de la première position à la deuxième ou de la deuxième position à la première position.

Il est souhaité réaliser un dispositif comprenant au moins deux manettes et tel que chaque manœuvre d'une quelconque parmi les manettes provoque un changement de position d'un organe pouvant prendre deux positions de manière réversible. L'organe peut par exemple être un générateur électrique produisant, à chaque changement de position, l'énergie nécessaire au fonctionnement du dispositif.

Le mouvement de l'organe devant être réversible il peut être envisagé de réaliser un dispositif monostable. Ainsi une manœuvre d'une quelconque parmi les manettes provoque un changement de position de l'organe. Le relâchement de la manette provoque un changement de position inverse de la manette et de l'organe qui reviennent à leur position d'origine, typiquement sous l'action d'un moyen de rappel, rappelant la manette et l'organe. Une telle configuration présente au moins les inconvénients suivants. L'organe, lorsqu'il s'agit d'un générateur, est résistant et nécessite un effort conséquent pour réaliser un changement de position. Le moyen de rappel devant réaliser le rappel de l'organe doit être dimensionné en conséquence. De plus lors de la manœuvre l'effort est au moins doublé en ce qu'il doit déplacer l'organe et de plus s'opposer au moyen de rappel qui doit être capable de le ramener en position initiale. De plus dans le cas d'un générateur, de l'énergie est générée lors du rappel, ce qui n'est le plus souvent pas pertinent.

Aussi est-il recherché une solution basée sur un dispositif bistable, commandable par plusieurs manettes monostables. Une telle solution, où l'organe est bistable, permet de ne rappeler que la manette, et ainsi de réduire nettement la capacité du moyen de rappel et l'effort de manœuvre.

### ETAT DE LA TECHNIQUE ANTERIEURE

Il est connu, par exemple de US-A-3491218, de FR 364525 ou de EP 0505682, d'utiliser une bascule pour réaliser un dispositif bistable, commandé par une manette monostable.

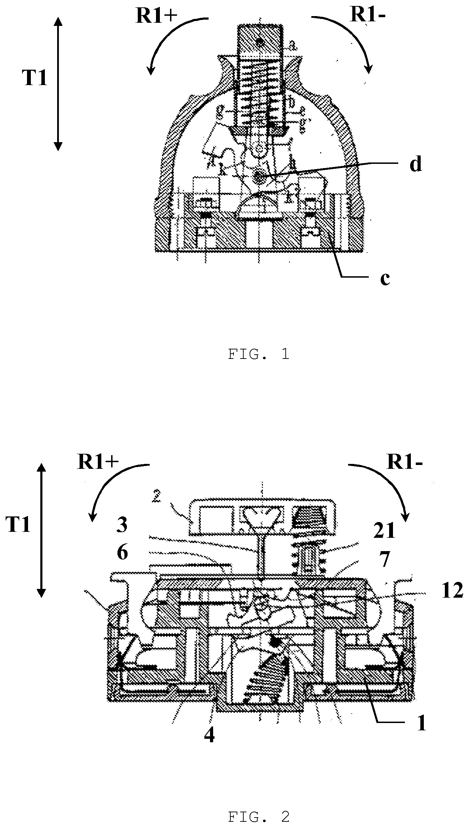

Tel qu'illustré à la figure 1, un tel dispositif comprend une embase c fixe, une manette a, un doigt f et une bascule h. Le doigt f est solidaire de la manette a, disposé entre la manette a et l'embase c, sensiblement aligné avec une première direction T1. La manette a est apte à être déplacée, relativement à l'embase c, de manière à déplacer le doigt f sensiblement en translation selon la première direction T1. La bascule h, disposée entre l'embase c et le doigt f, comprend deux vés k, k' faisant face au doigt f. La bascule h est articulée relativement à l'embase c au moyen d'un axe d.

La manette a, et avec elle le doigt f, peut se déplacer selon une première direction T1 et est rappelée en position haute. La bascule h est initialement dans une première position dans laquelle le premier vé k est en regard du doigt f. Un premier appui descendant sur la manette provoque un déplacement du doigt f qui vient en appui sur le vé en regard, ici le premier vé k. Un appui du doigt f dans le premier vé k tend à faire tourner la bascule h selon un premier sens R1 + jusqu'à atteindre une deuxième position dans laquelle le deuxième vé k' est en regard du doigt f. Un deuxième appui descendant sur la manette provoque un déplacement du doigt f qui vient en appui sur le vé en regard, maintenant le vé k'. Un appui du doigt f dans le deuxième vé k' tend à faire tourner la bascule h selon un deuxième sens R1-opposé au premier sens R1+. Ce faisant la bascule h est replacée dans sa position d'origine, telle que représentée à la figure 1, le premier vé k étant à nouveau en regard du doigt f. Une même manœuvre de la manette permet ainsi de déplacer la bascule h alternativement de la première position à la deuxième position et de la deuxième position à la première position.

La figure 2 illustre un dispositif analogue comprenant une embase 1 fixe, une manette 2 comprenant un moyen de rappel 21, un doigt 3 et une bascule 4. La bascule 4 comprend deux vés 6, 7. La bascule 4 est articulée relativement à l'embase 1 au moyen d'un axe 12.

L'art antérieur ne comprend à notre connaissance aucune divulgation d'un dispositif bistable commandable indifféremment par plusieurs manettes.

### OBJECTIF DE L'INVENTION

Le dispositif bistable de l'invention vise à remédier à tout ou partie des inconvénients de l'état de la technique et vise notamment à proposer un dispositif bistable ou toute manœuvre d'une des manettes provoque un changement de position de l'organe.

### RESUME DE L'INVENTION

L'invention a pour objet un dispositif bistable comprenant une embase fixe, au moins deux manettes, un doigt associé à chaque manette, solidaire de ladite manette, disposé entre la manette et l'embase, sensiblement aligné avec une première direction, une manette étant apte à être déplacée, relativement à l'embase, de manière à déplacer le doigt associé sensiblement en translation selon la première direction et un organe apte à occuper deux positions, le dispositif comprenant encore une bascule associée à chaque manette, disposée entre l'embase et le doigt associé, comprenant deux vés faisant face au doigt associé, un appui du doigt associé dans le premier vé tendant à faire tourner la bascule associée selon un premier sens et un appui du doigt associé dans le deuxième vé tendant à faire tourner la bascule associée selon un deuxième sens opposé au premier sens, toutes les bascules étant synchronisées en rotation et les bascules étant synchronisées avec l'organe.

Ainsi, chaque manœuvre/appui sur l'une quelconque des manettes monostables, provoque un changement de la position de l'organe, provoque directement un changement de position de la bascule associée et par liaison mécanique provoque un changement de position de toutes les autres bascules. L'organe est actionné de manière réversible et répétée, quelle que soit la manette manœuvrée.

Selon une autre caractéristique deux bascules tournant autour d'un même axe de rotation sont synchronisées par un arbre reliant les deux bascules, préférentiellement les deux bascules et l'arbre sont réalisés de matière.

Selon une autre caractéristique deux bascules tournant autour d'axes de rotation distincts sont synchronisées par un moyen de transmission, préférentiellement confondu avec l'organe.

Selon une autre caractéristique les deux positions de l'organe sont rotatives autour d'un axe perpendiculaire à la première direction ou translatives selon une deuxième direction perpendiculaire à la première direction.

Selon une autre caractéristique la disposition relative des vés d'une bascule et la course du doigt associé sont telles que la rotation de la bascule obtenue en appuyant le doigt associé dans le premier vé tend à placer le deuxième vé en regard du doigt en position de repos : sensiblement aligné avec la première direction, et la rotation de la bascule obtenue en appuyant le doigt associé dans le deuxième vé tend à placer le premier vé en regard du doigt associé en position de repos.

Selon une autre caractéristique les vés sont éloignés selon une deuxième direction sensiblement perpendiculaire à la première direction, afin qu'une bascule tourne, relativement à l'embase, autour d'un premier axe de rotation sensiblement perpendiculaire à la première direction et à la deuxième direction.

Selon une autre caractéristique une bascule comprend encore deux pieds, faisant face à l'embase et l'embase comprend deux gouttières aptes chacune à accueillir un desdits pieds de manière rotative.

Selon une autre caractéristique une bascule est sensiblement symétrique relativement à un axe de symétrie, sensiblement aligné avec la première direction.

Selon une autre caractéristique les axes de rotation des bascules sont parallèles.

Selon une autre caractéristique les bascules sont semblables et/ou les doigts sont semblables.

Selon une autre caractéristique une manette comprend un moyen de rappel tendant à éloigner la manette de la bascule associée.

Selon une autre caractéristique un doigt est apte à être déplacé, relativement à la manette associée, en rotation autour d'un deuxième axe sensiblement parallèle au premier axe et préférentiellement comprend un moyen de rappel en position de repos.

Selon une autre caractéristique au moins une bascule et/ou l'organe comprend au moins un moyen de rappel tendant à placer ladite au moins une bascule et/ou l'organe dans une de ses deux positions.

Selon une autre caractéristique un appui sur une manette actionne un contact électrique individualisé.

### BREVE DESCRIPTION DES FIGURES

D'autres caractéristiques et avantages innovants de l'invention ressortiront à la lecture de la description ci-après, fournie à titre indicatif et nullement limitatif, en référence aux dessins annexés, dans lesquels :
- la figure 1, déjà décrite, illustre un dispositif bistable selon l'art antérieur,
- la figure 2, déjà décrite, illustre un autre dispositif bistable selon l'art antérieur,
- la figure 3 illustre, en vue de face, un détail d'un mode de réalisation du dispositif bistable de l'invention,
- la figure 4 illustre, en vue de face, un mode de réalisation d'une bascule,
- la figure 5 illustre, en vue perspective, la bascule de la figure 6,
- la figure 6 illustre, en vue perspective, un autre mode de réalisation d'une bascule,
- la figure 7 illustre, en vue de face, un mode de réalisation d'un doigt,
- la figure 8 illustre, en vue perspective, le doigt de la figure 8,
- les figures 9a-d illustrent, en vue de face, la séquence d'actionnement d'un dispositif bistable, l'organe se translatant,
- les figures 10a-d illustrent, en vue de face, la séquence d'actionnement d'un dispositif bistable, l'organe étant rotatif,
- la figure 11 illustre en vue perspective un mode de réalisation d'un dispositif bistable comprenant 2 manettes,
- la figure 12 illustre en vue perspective un mode de réalisation d'un dispositif bistable comprenant 4 manettes.

Pour plus de clarté, les éléments identiques ou similaires sont repérés par des signes de référence identiques sur l'ensemble des figures. Un signe de référence numérique désigne un composant seul ou générique. Un signe littéral accolé précise le composant particulier. Ainsi 2 désigne une manette unique ou de manière générique toutes les manettes 2a, 2b, etc. 2a désigne une manette particulière. Un même signe littéral fait référence à des composants associés. Ainsi le doigt 3b est associé à la manette 2b.

### DESCRIPTION DETAILLEE D'UN MODE DE REALISATION

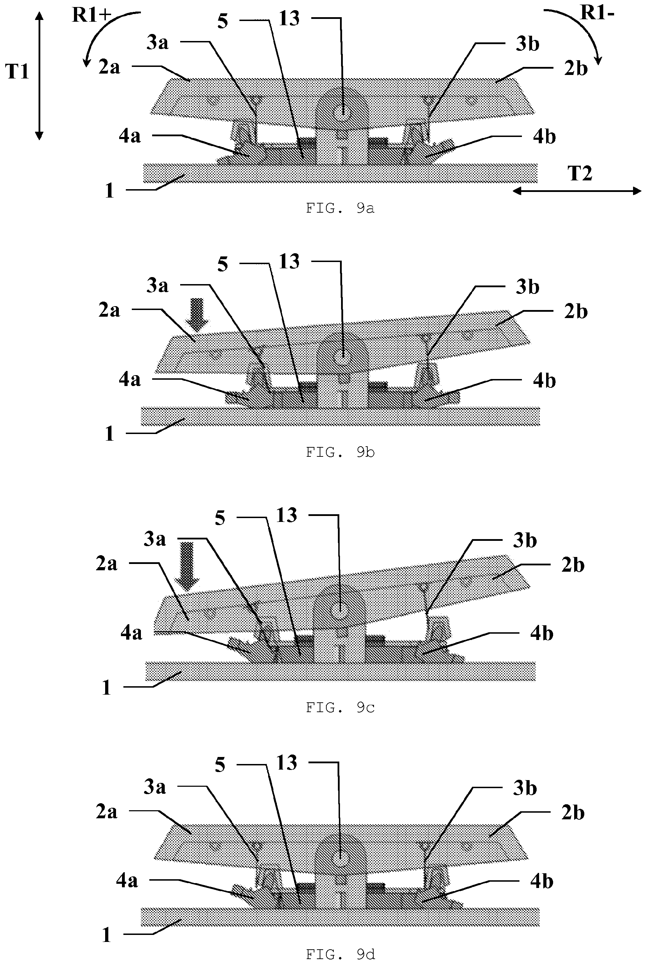

Tel qu'illustré aux figures 9-12, un dispositif bistable selon l'invention comprend une embase 1 fixe, au moins deux manettes 2a, 2b, un doigt 3a, 3b associé à chaque manette 2a, 2b, solidaire de ladite manette 2a, 2b, disposé entre la manette 2a, 2b et l'embase 1, sensiblement aligné avec une première direction T1, une manette 2a, 2b étant apte à être déplacée, relativement à l'embase 1, de manière à déplacer le doigt 3a, 3b associé sensiblement en translation selon la première direction T1 et un organe 5 apte à occuper deux positions.

Afin de réaliser la fonction de bi-stabilité de l'invention une bascule 4a, 4b est associée à chaque manette 2a, 2b, disposée entre l'embase 1 et le doigt 3a, 3b associé.

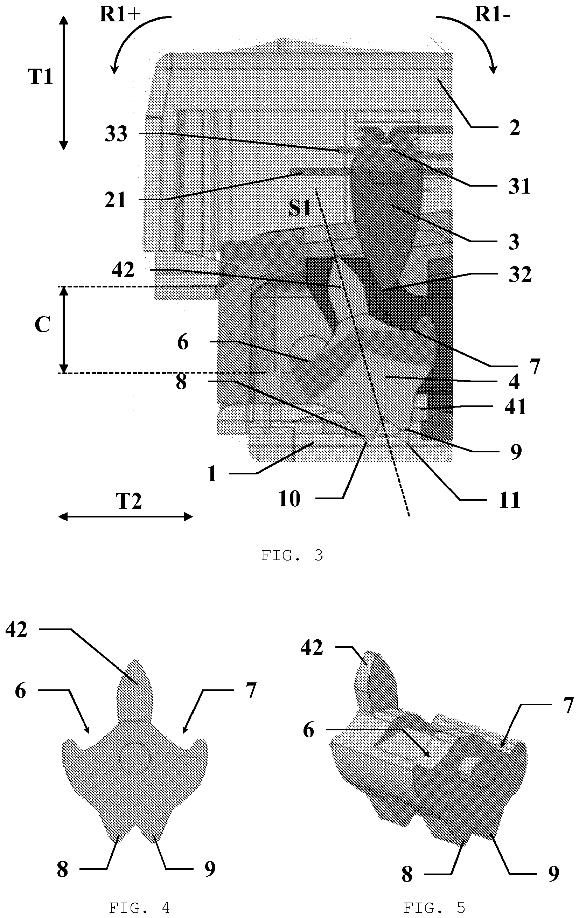

Une bascule 4a, 4b est disposée entre l'embase 1 et le doigt 3a, 3b associé. Une bascule 4a, 4b comprend deux vés 6, 7 faisant face au doigt 3a, 3b associé. Tel que plus particulièrement illustré à la figure 3, et conformément à l'usage connu d'une bascule 4, les vés 6, 7 sont conformés et disposés de telle manière à ce qu'un appui du doigt 3 dans le premier vé 6 tende à faire tourner la bascule 4 selon un premier sens R1+ et qu'un appui du doigt 3 dans le deuxième vé 7 tende à faire tourner la bascule 4 selon un deuxième sens R1- opposé au premier sens R1+.

Selon une autre caractéristique de l'invention toutes les bascules 4a, 4b sont synchronisées en rotation. Ainsi lorsqu'une bascule 4 change de position angulaire, toutes les autres bascules 4 changent aussi de position angulaire. De plus les bascules 4a, 4b sont synchronisées avec l'organe 5. Ainsi chaque manœuvre/appui sur l'une quelconque des manettes 2a, 2b, provoque directement un changement de position de la bascule 4a, 4b associée et, par liaison mécanique, provoque un changement de la position de l'organe 5 et un changement de position de toutes les autres bascules 4a, 4b. L'organe 5 est actionné de manière réversible et répétée, à chaque manœuvre, quelle que soit la manette 2a, 2b manœuvrée.

La synchronisation est typiquement réalisée par une liaison mécanique. Cette liaison mécanique peut prendre plusieurs formes.

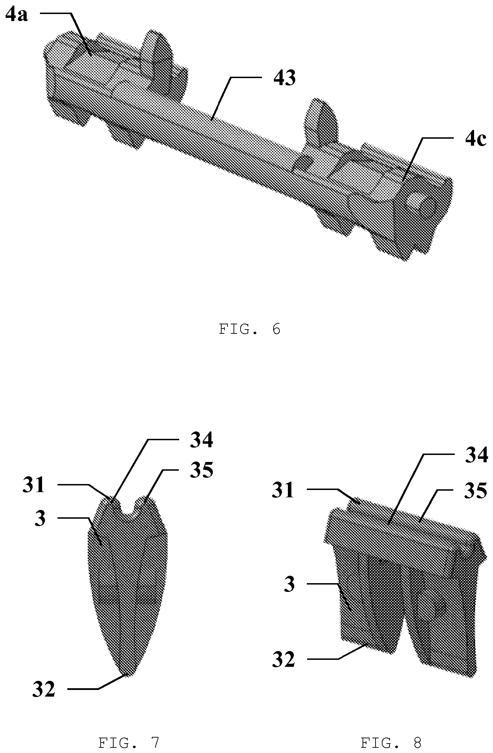

Selon une première forme, applicable à deux bascules 4a, 4c tournant autour d'un même axe de rotation, la synchronisation peut être réalisée par un arbre 43 reliant les deux bascules 4a, 4c. La liaison est ici une liaison rigide, les deux bascules 4a, 4c étant monobloc. Tel qu'illustré à la figure 6, selon un mode de réalisation préférentiel les deux bascules 4a, 4c et l'arbre 43 sont réalisés de matière.

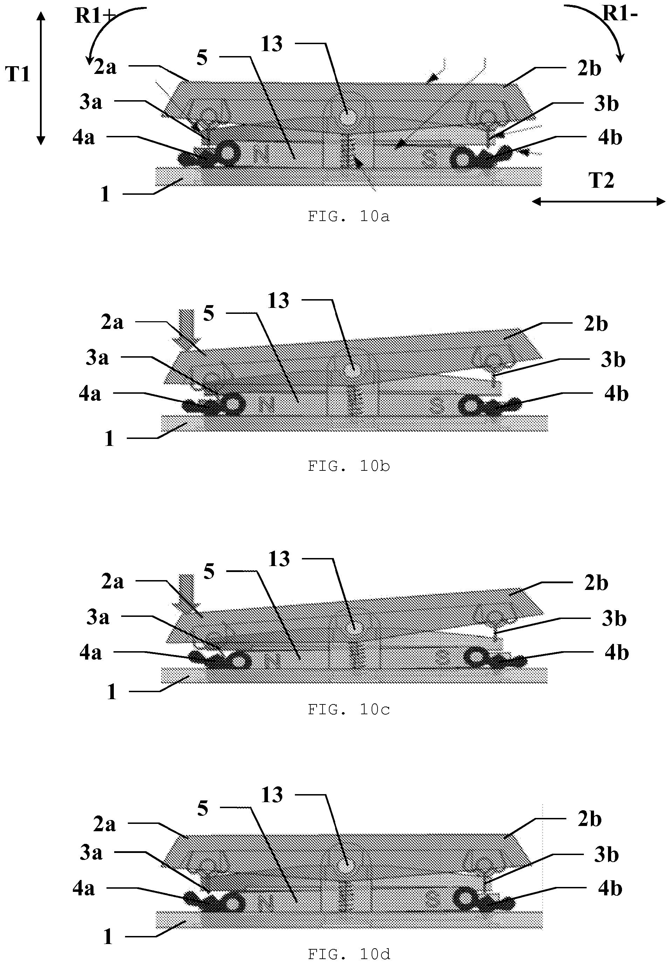

Selon une autre forme, applicable à deux bascules 4a, 4b tournant autour d'axes de rotation distincts, la synchronisation peut être réalisée par un moyen de transmission. Ce moyen de transmission peut être quelconque. Selon un mode de réalisation, le moyen de transmission est une biellette apte à transmettre en translation le mouvement rotatif d'une bascule 4a à une autre bascule 4b. Selon un autre mode de réalisation le moyen de transmission est une biellette/un rotateur, tournant le cas échéant autour d'un arbre, apte à transmettre en rotation le mouvement rotatif d'une bascule 4a à une autre bascule 4b. Selon un mode de réalisation plus particulièrement illustré aux figures 9a-d (cas translatif) ou aux figures 10a-d (cas rotatif), l'organe 5 lui-même est avantageusement utilisé comme moyen de transmission.

Selon une autre caractéristique, les deux positions de l'organe 5 sont rotatives en ce qu'elles se déduisent l'une de l'autre par une rotation autour d'un axe perpendiculaire à la première direction T1. Cet axe de rotation est avantageusement parallèle à un axe de rotation R1 des bascules 4a, 4b. Ceci est plus particulièrement illustré aux figures 10a-d.

Selon une autre caractéristique, les deux positions de l'organe 5 sont translatives en ce qu'elles se déduisent l'une de l'autre par une translation selon une deuxième direction T2 perpendiculaire à la première direction T1. Ceci est plus particulièrement illustré aux figures 9a-d.

Selon une autre caractéristique de l'invention la disposition relative des vés 6, 7 d'une bascule 4 et la course du doigt 3 associé sont telles que la rotation de la bascule 4 obtenue en appuyant le doigt 3 associé dans le premier vé 6 tend à placer le deuxième vé 7 en regard du doigt 3 associé en position de repos. Un doigt 3 est en position de repos lorsqu'il est sensiblement aligné avec la première direction T1. Ainsi lorsqu'un doigt 3 revient en position de repos, après avoir réalisé un appui dans le premier vé 6, ledit appui a provoqué une rotation de la bascule 4 associée telle que le deuxième vé 7 se trouve maintenant en regard du doigt 3. Ainsi un nouvel appui du doigt 3 associé rencontrera le deuxième vé 7.

Réciproquement, la rotation d'une bascule 4 obtenue en appuyant le doigt 3 associé dans le deuxième vé 7 tend à placer le premier vé 6 en regard du doigt 3 associé en position de repos. Ceci confère une réversibilité à une bascule 4 et par conséquent au dispositif bistable.

Selon une autre caractéristique de l'invention les vés 6, 7 sont éloignés selon une même deuxième direction T2 sensiblement perpendiculaire à la première direction T1. Ainsi le mouvement d'une bascule 4, relativement à l'embase 1, décrit une rotation autour d'un premier axe R1 de rotation sensiblement perpendiculaire à la première direction T1 et à la deuxième direction T2, soit perpendiculaire au plan de la figure 3.

Selon une autre caractéristique, illustrée par exemple à la figure 3, une bascule 4a, 4b comprend deux pieds 8, 9 et l'embase 1 comprend deux gouttières 10, 11 homologues. Les pieds 8, 9 sont disposés de manière à faire face à l'embase 1. Autrement dit, les pieds 8, 9 sont disposés sur la bascule 4 du côté opposé aux vés 6, 7. Les gouttières 10, 11 sont disposées de manière à pouvoir chacune accueillir un desdits pieds 8, 9.

La forme d'un pied 8, 9 et la forme d'une gouttière 10, 11 sont telles qu'un pied en contact avec une gouttière puisse tourner relativement à la gouttière Pour cela un pied présente par exemple une forme de dièdre sortant, tandis que la gouttière présente un dièdre rentrant de plus grande ouverture. Alternativement un pied présente, tel qu'illustré, une forme circulaire sortante, tandis que la gouttière présente un dièdre rentrant ou encore, tel qu'illustré, une forme circulaire rentrante, de diamètre sensiblement égal ou supérieur à celui d'un pied.

Lorsqu'un pied 8, 9 est en contact avec sa gouttière 10, 11 homologue, la bascule 4, 4a, 4b tourne autour d'un axe R1 se confondant avec le (centre du) pied 8, 9. La position du premier axe R1 de rotation de la bascule 4 est ainsi avantageusement variable.

Cette configuration avantageuse permet à une bascule 4, 4a, 4b, au cours de son mouvement de rotation, de changer le pied 8, 9 en appui et ainsi modifier la position de l'axe R1 de rotation. Selon sa position une bascule 4, 4a, 4b présente un des vés 6, 7 en regard du doigt 3a, 3b associé. La bascule 4a, 4b est alors en appui sur le pied 8, 9 le plus éloigné du vé 6, 7 présenté. Ainsi dans la position illustrée à la figure 3, la bascule 4 présente le deuxième vé 7 et est en appui sur le premier pied 8. Dans son autre position, la bascule présente le premier vé 6 et est en appui sur le deuxième pied 9. Ceci permet de faire apparaître dans la ligne d'action du doigt 3 un bras de levier important qui augmente d'autant la démultiplication et évite tout risque de blocage.

Selon une autre caractéristique de l'invention la distance entre les gouttières 10, 11 est sensiblement égale à la distance entre les pieds 8, 9. Ces distances sont mesurées le long de la deuxième direction T2. Ceci permet à chacun des pieds 8, 9 de venir se loger dans sa gouttière 10, 11 homologue lors de la rotation de la bascule 4.

Selon un mode de réalisation préférentiel, une bascule 4, 4a, 4b est sensiblement symétrique relativement à un axe S1 de symétrie, sensiblement aligné avec la première direction T1. Il s'ensuit que les vés 6, 7 présentent des formes et des dispositions sensiblement symétriques relativement à l'axe S1 de symétrie. Il s'ensuit encore que les pieds 8, 9 présentent des formes et des dispositions sensiblement symétriques relativement à l'axe S1 de symétrie.

Afin de simplifier la réalisation des moyens de synchronisation, les axes de rotation des bascules 4a, 4b sont préférentiellement parallèles entre eux.

Dans un souci de simplification de la cinématique et de réduction du nombre de pièces différentes, les bascules 4a, 4b sont préférentiellement semblables. De même les doigts 3a, 3b sont préférentiellement semblables.

Selon une autre caractéristique, une manette 2a, 2b comprend un moyen de rappel 21 tendant à éloigner la manette 2a, 2b de la bascule 4a, 4b associée. Ainsi une manette 2a, 2b est monostable.

Dans le mode de réalisation illustré, où une même pièce basculante forme une première manette 2a et une deuxième manette 2b, à chacune de ses extrémités, le moyen de rappel 21 peut être commun aux deux manettes 2a, 2b.

Un tel moyen de rappel 21 n'ayant à mobiliser que la ou les manettes 2a, 2b relativement légères et non l'organe 5, peut être dimensionné légèrement en conséquence.

Une manette 2 est typiquement manœuvrée par un appui, typiquement manuel, selon T1, de haut en bas dans le plan de la figure 3. Cet appui s'oppose au moyen de rappel 21 et entraîne le doigt 3 associé dans un mouvement le rapprochant de la bascule 4 associée. Lorsque l'appui sur la manette 2 cesse, le moyen de rappel 21 ramène la manette 2 dans sa position haute ou de repos et avec elle le doigt 3.

Selon une autre caractéristique, afin de pouvoir mieux se désaxer et venir dans l'un des vés 6, 7 associés, un doigt 3 est apte à être déplacé, relativement à la manette 2 associée, en rotation autour d'un deuxième axe sensiblement parallèle au premier axe R1.

Alternativement la fonction de désaxement peut être réalisée par déformation du doigt 3.

Selon un mode de réalisation préférentiel, illustré aux figures 3, 7, 8 une rotation du doigt 3 peut être réalisée, à l'instar de la rotation de la bascule 4, au moyen de deux lobes 34, 35, comparables aux deux pieds 8, 9 coopérant avec deux gouttières homologues réalisées dans la manette 2, comparables aux deux gouttières 10, 11.

Pour un doigt 3 apte à être déplacé en rotation, un moyen de rappel 33 permet avantageusement de ramener le doigt 3 en position de repos.

Selon une autre caractéristique, une bascule 4, 4a, 4b comprend au moins un moyen de rappel 41 tendant à placer la bascule 4 dans une de ses positions de rotation extrêmes. Ce moyen de rappel 41 permet de renforcer la bi-stabilité de la bascule 4 en immobilisant la bascule 4 dans ses deux positions. Il apporte de plus un effort résistant en début de rotation de la bascule 4 qui, transmis par la manette 2, fournit à l'opérateur une sensation tactile. Au contraire, en fin de rotation de la bascule 4 le moyen de rappel 41 accompagne le mouvement en réduisant l'effort de manœuvre. Ceci permet une accélération de la fin de la manœuvre réalisant un déclenchement bref.

Du fait de la synchronisation des bascules 4a, 4b et de l'organe 5, le moyen de rappel 41 peut être appliqué sur une des bascules 4a, 4b, sur plusieurs des bascules 4a, 4b et/ou sur l'organe 5.

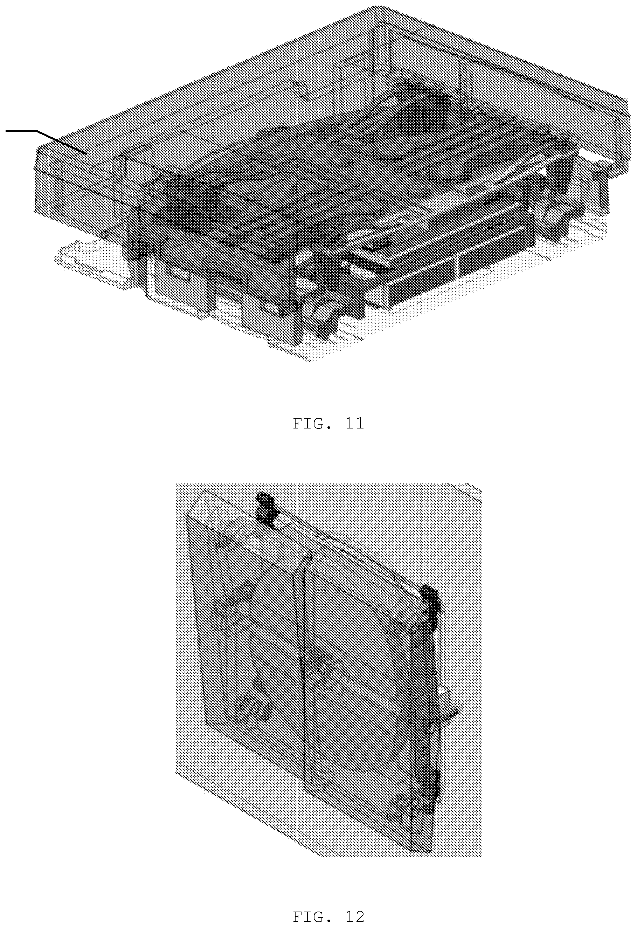

Selon une autre caractéristique, il est associé à chaque manette 2a, 2b un contact électrique individualisé 14. Ainsi un dispositif à quatre manettes 2a-d, tel qu'illustré à la figure 12, permet de produire quatre signaux distincts en fonction de la manette 2a-d manœuvrée, chaque manoeuvre en plus de fournir ledit signal, modifiant la position de l'organe 5.

La course d'une manette 2a, 2b et d'un doigt 3a, 3b associé est avantageusement limitée par une butée.

Les figures 4 et 5 détaillent un mode de réalisation d'une bascule 4. Les figures 7 et 8 détaillent un mode de réalisation d'un doigt 3.

Les figures 9a-d illustrent les étapes successives d'une séquence d'actionnement d'une manette 2a d'un dispositif dont l'organe 5 est translatif.

Initialement, à la figure 9a, l'organe 5 est dans une de ses deux positions, ici vers la gauche dans le plan de la figure. Les bascules 4a, 4b sont, elles aussi, dans une de leurs positions angulaires extrêmes stables, ici tournées vers la gauche. La manette 2a est dans sa position de repos.

A la figure 9b, un appui est appliqué à la manette 2a. Ceci actionne le doigt associé 3a vers le bas de manière à venir actionner la bascule 4a associée. La figure 9b illustre une position intermédiaire, sensiblement à mi-course. La figure 9c illustre la fin de course, l'appui étant poursuivi. La bascule 4a, sous l'action du doigt associé 3a, tourne en sens horaire pour atteindre son autre position angulaire extrême stable, ici tournée vers la droite. Ce changement de position entraîne, via une came 42 de la bascule 4a, l'organe 5 qui change de position, de la gauche vers la droite, en translation. Ce mouvement actionne à son tour une came 42 de la bascule 4b qui tourne à son tour pour atteindre son autre position angulaire extrême stable, ici tournée vers la droite.

Si une bascule 4c est présente, alignée en rotation avec la bascule 4a, elle est déplacée directement par la bascule 4a, via un arbre 43. Si une bascule 4d est présente, alignée en rotation avec la bascule 4b, elle est déplacée, via l'organe 5, par la bascule 4b, via un arbre 43.

Finalement, à la figure 9d, l'appui sur la manette 2a est relâché. Sous l'effet du moyen de rappel 21, la manette 2a, ainsi que toutes les autres manettes 2b, revient dans sa position de repos. L'organe 5 est maintenant dans son autre position, ici vers la droite, et ce de manière stable. Les bascules 4a, 4b sont, elles aussi, dans leur autre position, ici tournées vers la droite.

Un appui sur une quelconque des manettes, y compris la manette 2a, provoquerait un retour du dispositif, organe 5 et bascules 4a, 4b, dans la configuration initiale de la figure 9a.

Les figures 10a-d illustrent les étapes successives d'une séquence d'actionnement d'une manette 2a d'un dispositif dont l'organe 5 est rotatif.

Initialement, à la figure 10a, l'organe 5 est dans une de ses deux positions angulaires, ici tourné dans le sens horaire dans le plan de la figure. Les bascules 4a, 4b sont, elles aussi, dans une de leurs positions angulaires extrêmes stables, ici tournées vers la gauche. La manette 2a est dans sa position de repos.

A la figure 10b, un appui est appliqué à la manette 2a. Ceci actionne le doigt associé 3a vers le bas de manière à venir actionner la bascule 4a associée. La figure 10b illustre une position intermédiaire, sensiblement à mi-course. La figure 10c illustre la fin de course, l'appui étant poursuivi. La bascule 4a, sous l'action du doigt associé 3a, tourne en sens horaire pour atteindre son autre position angulaire extrême stable, ici tournée vers la droite. Ce changement de position, entraîne en rotation, via une articulation, l'organe 5 qui change de position angulaire, selon une rotation anti-horaire. Ce mouvement actionne à son tour, via une articulation, la bascule 4b qui tourne à son tour pour atteindre son autre position angulaire extrême stable, ici tournée vers la droite.

Si une bascule 4c est présente, alignée en rotation avec la bascule 4a, elle est déplacée directement par la bascule 4a, via un arbre 43. Si une bascule 4d est présente, alignée en rotation avec la bascule 4b, elle est déplacée, via l'organe 5, par la bascule 4b, via un arbre 43.

Finalement, à la figure 10d, l'appui sur la manette 2a est relâché. Sous l'effet du moyen de rappel 21, la manette 2a, ainsi que toutes les autres manettes 2b, revient dans sa position de repos. L'organe 5 est maintenant dans son autre position, ici tourné dans le sens anti-horaire, et ce de manière stable. Les bascules 4a, 4b sont, elles aussi, dans leur autre position, ici tournées vers la droite.

Un appui sur une quelconque des manettes, y compris la manette 2a, provoquerait un retour du dispositif, organe 5 et bascules 4a, 4b, dans la configuration initiale de la figure 10a.

Là où un dispositif monostable nécessiterait un effort d'actionnement de l'ordre de 15 N, la conception bistable proposée par l'invention permet de réaliser un dispositif manœuvrable avec un effort de l'ordre de 6 N. Le dispositif proposé permet encore une réalisation présentant une hauteur totale inférieure à 13 mm. La course d'une manette 4a, 4b peut être réduite à une valeur comprise entre 2 et 3 mm. De manière indicative, le débattement angulaire d'une bascule 4 est de l'ordre de +/- 15°.

## Revendications

1. Dispositif bistable comprenant une embase (1) fixe, au moins deux manettes (2a, 2b), un doigt (3a, 3b) associé à chaque manette (2a, 2b), solidaire de ladite manette (2a, 2b), disposé entre la manette (2a, 2b) et l'embase (1), sensiblement aligné avec une première direction (T1), une manette (2a, 2b) étant apte à être déplacée, relativement à l'embase (1), de manière à déplacer le doigt (3a, 3b) associé sensiblement en translation selon la première direction (T1) et un organe (5) apte à occuper deux positions, ***caractérisé en* ce *qu'il*** comprend encore une bascule (4a, 4b) associée à chaque manette (2a, 2b), disposée entre l'embase (1) et le doigt (3a, 3b) associé, comprenant deux vés (6, 7) faisant face au doigt (3a, 3b) associé, un appui du doigt (3a, 3b) associé dans le premier vé (6) tendant à faire tourner la bascule (4a, 4b) associée selon un premier sens (R1+) et un appui du doigt (3a, 3b) associé dans le deuxième vé (7) tendant à faire tourner la bascule (4a, 4b) associée selon un deuxième sens (R1-) opposé au premier sens (R1+), **en ce que** toutes les bascules (4a, 4b) sont synchronisées en rotation et **en ce que** les bascules (4a, 4b) sont synchronisées avec l'organe (5).

2. Dispositif selon la revendication 1, où deux bascules (4a, 4c) tournant autour d'un même axe de rotation sont synchronisées par un arbre (43) reliant les deux bascules (4a, 4c), préférentiellement les deux bascules (4a, 4c) et l'arbre (43) sont réalisés de matière.

3. Dispositif selon l'une quelconque des revendications 1 ou 2, où deux bascules (4a, 4b) tournant autour d'axes de rotation distincts sont synchronisées par un moyen de transmission, préférentiellement confondu avec l'organe (5).

4. Dispositif selon l'une quelconque des revendications 1 à 3, où les deux positions de l'organe (5) sont rotatives autour d'un axe perpendiculaire à la première direction (T1) ou translatives selon une deuxième direction (T2) perpendiculaire à la première direction (T1).

5. Dispositif selon l'une quelconque des revendications 1 à 4, où la disposition relative des vés (6, 7) d'une bascule (4a, 4b) et la course du doigt (3a, 3b) associé sont telles que la rotation de la bascule (4a, 4b) obtenue en appuyant le doigt (3a, 3b) associé dans le premier vé (6) tend à placer le deuxième vé (7) en regard du doigt (3a, 3b) en position de repos : sensiblement aligné avec la première direction (T1), et la rotation de la bascule (4a, 4b) obtenue en appuyant le doigt (3a, 3b) associé dans le deuxième vé (7) tend à placer le premier vé (6) en regard du doigt (3a, 3b) associé en position de repos.

6. Dispositif selon l'une quelconque des revendications 1 à 5, où les vés (6, 7) sont éloignés selon une deuxième direction (T2) sensiblement perpendiculaire à la première direction (T1), afin qu'une bascule (4a, 4b) tourne, relativement à l'embase (1), autour d'un premier axe (R1) de rotation sensiblement perpendiculaire à la première direction (T1) et à la deuxième direction (T2).

7. Dispositif selon l'une quelconque des revendications 1 à 6, où une bascule (4, 4a, 4b) comprend encore deux pieds (8, 9), faisant face à l'embase (1) et où l'embase (1) comprend deux gouttières (10, 11) aptes chacune à accueillir un desdits pieds (8, 9) de manière rotative.

8. Dispositif selon l'une quelconque des revendications 1 à 7, où une bascule (4a, 4b) est sensiblement symétrique relativement à un axe (S1) de symétrie, sensiblement aligné avec la première direction (T1).

9. Dispositif selon l'une quelconque des revendications 1 à 8, où les axes de rotation des bascules (4a, 4b) sont parallèles.

10. Dispositif selon l'une quelconque des revendications 1 à 9, où les bascules (4a, 4b) sont semblables et/ou les doigts (3a, 3b) sont semblables.

11. Dispositif selon l'une quelconque des revendications 1 à 10, où une manette (2a, 2b) comprend un moyen de rappel (21) tendant à éloigner la manette (2a, 2b) de la bascule (4a, 4b) associée.

12. Dispositif selon l'une quelconque des revendications 1 à 11, où un doigt (3a, 3b) est apte à être déplacé, relativement à la manette (2a, 2b) associée, en rotation autour d'un deuxième axe sensiblement parallèle au premier axe (R1) et préférentiellement comprend un moyen de rappel (33) en position de repos.

13. Dispositif selon l'une quelconque des revendications 1 à 12, où au moins une bascule (4a, 4b) et/ou l'organe (5) comprend au moins un moyen de rappel (41) tendant à placer ladite au moins une bascule (4a, 4b) et/ou l'organe (5) dans une de ses deux positions.

14. Dispositif selon la revendication 13, où un appui sur une manette (2a, 2b) actionne un contact électrique (14) individualisé.

## Patentansprüche

1. Bistabile Vorrichtung, umfassend eine feste Grundplatte (1), mindestens zwei Handgriffe (2a, 2b), einen jedem Handgriff (2a, 2b) zugeordneten Finger (3a, 3b), der mit dem Handgriff (2a, 2b) fest verbunden ist, der zwischen dem Handgriff (2a, 2b) und der Grundplatte (1) etwa fluchtend mit einer ersten Richtung (T1) angeordnet ist, wobei ein Handgriff (2a, 2b) imstande ist, relativ zur Grundplatte (1) derart verlagert zu werden, dass der zugeordnete Finger (3a, 3b) etwa translatorisch gemäß der ersten Richtung (T1) verlagert wird, und ein Organ (5), das imstande ist, zwei Positionen einzunehmen, **dadurch gekennzeichnet, dass** sie weiterhin eine jedem Handgriff (2a, 2b) zugeordnete Wippe (4a, 4b) umfasst, die zwischen der Grundplatte (1) und dem zugeordneten Finger (3a, 3b) angeordnet ist, umfassend zwei Vs (6, 7) gegenüber dem zugeordneten Finger (3a, 3b), eine im ersten V (6) zugeordnete Abstützung des Fingers (3a, 3b), die darauf abzielt, die zugeordnete Wippe (4a, 4b) gemäß einer ersten Richtung (R1+) zu drehen und eine im zweiten V (7) zugeordnete Abstützung des Fingers (3a, 3b), die darauf abzielt, die zugeordnete Wippe (4a, 4b) gemäß einer zweiten Richtung (R1-) entgegengesetzt zur ersten Richtung (R1+) zu drehen, und dass alle Wippen (4a, 4b) rotatorisch synchronisiert sind und dass die Wippen (4a, 4b) mit dem Organ (5) synchronisiert sind.

2. Vorrichtung nach Anspruch 1, wobei zwei Wippen (4a, 4c), die um dieselbe Rotationsachse drehen, von einer Welle (43) synchronisiert sind, die die zwei Wippen (4a, 4c) verbindet, wobei die zwei Wippen (4a, 4c) und die Welle (43) vorzugsweise einstückig hergestellt sind.

3. Vorrichtung nach einem der Ansprüche 1 oder 2, wobei zwei Wippen (4a, 4b), die um unterschiedliche Rotationsachsen drehen, von einem Übertragungsmittel synchronisiert sind, das vorzugsweise mit dem Organ (5) zusammenfällt.

4. Vorrichtung nach einem der Ansprüche 1 bis 3, wobei die zwei Positionen des Organs (5) um eine Achse senkrecht zur ersten Richtung (T1) rotatorisch oder gemäß einer zweiten Richtung (T2) senkrecht zur ersten Richtung (T1) translatorisch sind.

5. Vorrichtung nach einem der Ansprüche 1 bis 4, wobei die relative Anordnung der Vs (6, 7) einer Wippe (4a, 4b) und der Weg des zugordneten Fingers (3a, 3b) derart sind, dass die durch Abstützung des zugeordneten Fingers (3a, 3b) im ersten V (6) erhaltene Rotation der Wippe (4a, 4b) darauf abzielt, das zweite V (7) dem Finger (3a, 3b) zugewandt in Ruhestellung etwa fluchtend mit der ersten Richtung (T1) zu platzieren und die durch Abstützung des zugeordneten Fingers (3a, 3b) im zweiten V (7) erhaltene Rotation der Wippe (4a, 4b) darauf abzielt, das erste V (6) dem zugeordneten Finger (3a, 3b) zugewandt in Ruhestellung zu platzieren.

6. Vorrichtung nach einem der Ansprüche 1 bis 5, wobei die Vs (6, 7) gemäß einer zweiten Richtung (T2) etwa senkrecht zur ersten Richtung (T1) entfernt sind, damit eine Wippe (4a, 4b) relativ zur Grundplatte (1) um eine erste Rotationsachse (R1) etwa senkrecht zur ersten Richtung (T1) und zur zweiten Richtung (T2) dreht.

7. Vorrichtung nach einem der Ansprüche 1 bis 6, wobei eine Wippe (4, 4a, 4b) weiterhin zwei Füße (8, 9) umfasst, die der Grundplatte (1) gegenüberliegen und wobei die Grundplatte (1) zwei Rinnen (10, 11) umfasst, von denen jede imstande ist, einen der Füße (8, 9) rotatorisch aufzunehmen.

8. Vorrichtung nach einem der Ansprüche 1 bis 7, wobei eine Wippe (4a, 4b) zu einer Symmetrieachse (S1), die etwa mit der ersten Richtung (T1) fluchtet, etwa relativ symmetrisch ist.

9. Vorrichtung nach einem der Ansprüche 1 bis 8, wobei die Rotationsachsen der Wippen (4a, 4b) parallel sind.

10. Vorrichtung nach einem der Ansprüche 1 bis 9, wobei die Wippen (4a, 4b) ähnlich sind und/oder die Finger (3a, 3b) ähnlich sind.

11. Vorrichtung nach einem der Ansprüche 1 bis 10, wobei ein Handgriff (2a, 2b) ein Rückstellmittel (21) umfasst, das darauf abzielt, den Handgriff (2a, 2b) von der zugeordneten Wippe (4a, 4b) zu entfernen.

12. Vorrichtung nach einem der Ansprüche 1 bis 11, wobei ein Finger (3a, 3b) imstande ist, relativ zum zugeordneten Handgriff (2a, 2b) rotatorisch um eine zweite Achse etwa parallel zur ersten Achse (R1) verlagert zu werden und vorzugsweise ein Rückstellmittel (33) in Ruhestellung umfasst.

13. Vorrichtung nach einem der Ansprüche 1 bis 12, wobei mindestens eine Wippe (4a, 4b) und/oder das Organ (5) mindestens ein Rückstellmittel (41) umfasst, das darauf abzielt, die mindestens eine Wippe (4a, 4b) und/oder das Organ (5) in eine ihrer/seiner zwei Positionen zu platzieren.

14. Vorrichtung nach Anspruch 13, wobei eine Abstützung auf einem Handgriff (2a, 2b) einen individualisierten elektrischen Kontakt (14) betätigt.

## Claims

1. Bistable device comprising a fixed baseplate (1), at least two levers (2a, 2b), a tappet (3a, 3b) associated with each lever (2a, 2b), integral with said lever (2a, 2b), disposed between the lever (2a, 2b) and the baseplate (1), substantially aligned in a first direction (T1), a lever (2a, 2b) able to be displaced, relative to the baseplate (1), so as to displace the associated tappet (3a, 3b) substantially in translation in the first direction (T1) and a member (5) able to take two positions, **characterised in that** it further comprises a rocker (4a, 4b) associated with each lever (2a, 2b), disposed between the baseplate (1) and the associated tappet (3a, 3b), comprising two V-shapes (6, 7) which face the associated tappet (3a, 3b), a touch of the associated tappet (3a, 3b) in the first V-shape (6) tending to turn the associated rocker (4a, 4b) in a first direction (R1 +) and a touch of the associated tappet (3a, 3b) in the second V-shape (7) tending to turn the associated rocker (4a, 4b) in a second direction (R1-) opposite to the first direction (R1+), **in that** all the rockers (4a, 4b) are synchronised in rotation and **in that** the rockers (4a, 4b) are synchronised with the member (5).

2. Device according to claim 1, where two rockers (4a, 4c) turning around the same axis of rotation are synchronised by a shaft (43) connecting the two rockers (4a, 4c), preferably the two rockers (4a, 4c) and the shaft (43) are made from the same material.

3. Device according to any of claims 1 or 2, where two rockers (4a, 4b) turning around separate axes of rotation are synchronised by a means of transmission, preferably confounded with the member (5).

4. Device according to any of claims 1 to 3, where the two positions of the member (5) are rotatable around an axis perpendicular to the first direction (T1) or translatable in a second direction (T2) perpendicular to the first direction (T1).

5. Device according to any of claims 1 to 4, where the relative disposition of the V-shapes (6, 7) of a rocker (4a, 4b) and the stroke of the associated tappet (3a, 3b) are such that the rotation of the rocker (4a, 4b) obtained by touching the associated tappet (3a, 3b) in the first V-shape (6) tends to place the second V-shape (7) facing the tappet (3a, 3b) in the idle position: substantially aligned with the first direction (T1), and the rotation of the rocker (4a, 4b) obtained by touching the associated tappet (3a, 3b) in the second V-shape (7) tends to place the first V-shape (6) facing the associated tappet (3a, 3b) in the idle position.

6. Device according to any of claims 1 to 5, where the V-shapes (6, 7) are moved away in a second direction (T2) substantially perpendicular to the first direction (T1), so that a rocker (4a, 4b) turns, relative to the baseplate (1), around a first axis (R1) of rotation substantially perpendicular to the first direction (T1) and to the second direction (T2).

7. Device according to any of claims 1 to 6, where a rocker (4, 4a, 4b) further comprises two feet (8, 9), which face the baseplate (1) and where the baseplate (1) comprises two gutters (10, 11) each able to receive one of said feet (8, 9) rotatably.

8. Device according to any of claims 1 to 7, where a rocker (4a, 4b) is substantially symmetric relative to an axis (S1) of symmetry, substantially aligned with the first direction (T1).

9. Device according to any of claims 1 to 8, where the axes of rotation of the rockers (4a, 4b) are parallel.

10. Device according to any of claims 1 to 9, where the rockers (4a, 4b) are similar and/or the tappets (3a, 3b) are similar.

11. Device according to any of claims 1 to 10, where a lever (2a, 2b) comprises a return means (21) tending to move the lever (2a, 2b) away from the associated rocker (4a, 4b).

12. Device according to any of claims 1 to 11, where a tappet (3a, 3b) is able to be displaced, relative to the associated lever (2a, 2b), in rotation about a second axis substantially parallel to the first axis (R1) and preferably comprises a return means (33) in the idle position.

13. Device according to any of claims 1 to 12, where at least one rocker (4a, 4b) and/or the member (5) comprises at least one return means (41) tending to place said at least one rocker (4a, 4b) and/or the member (5) in one of the two positions thereof.

14. Device according to claim 13, where a touch on a lever (2a, 2b) actuates an individualised electrical contact (14).
